(19) Europäisches Patentamt / European Patent Office / Office européen des brevets

(11) **EP 4 383 611 A1**

(12) **EUROPEAN PATENT APPLICATION**
published in accordance with Art. 153(4) EPC

(43) Date of publication:
**12.06.2024 Bulletin 2024/24**

(21) Application number: **22853520.9**

(22) Date of filing: **05.08.2022**

(51) International Patent Classification (IPC):
*H04L 1/18* (2023.01)   *H04L 5/00* (2006.01)
*H04W 72/04* (2023.01)   *H04W 72/12* (2023.01)

(52) Cooperative Patent Classification (CPC):
**H04L 1/18; H04L 5/00; H04W 72/04; H04W 72/12**

(86) International application number:
**PCT/KR2022/011619**

(87) International publication number:
**WO 2023/014145 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021   KR 20210104072**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Plasseraud IP**
**66, rue de la Chaussée d'Antin**
**75440 Paris Cedex 09 (FR)**

(54) **METHOD AND DEVICE FOR COMMUNICATING IN WIRELESS COMMUNICATION SYSTEM**

(57)     A method and a device for communicating in a wireless communication system are disclosed. A method by which a UE communicates, according to one embodiment of the present disclosure, comprises the steps of: receiving, from a base station, configuration information related to a common PUCCH resource for a plurality of multicast terminals on the basis that a UE switches to a non-connected mode; transmitting, to the base station, on the basis that a first group common PDSCH is received from the base station, a first PUCCH including multicast HARQ-ACK information for the first group common PDSCH on the basis of the configuration information; and transmitting, to the base station, on the basis that the UE switches from the non-connected mode to a connected mode, a second PUCCH including multicast HARQ-ACK information about a second group common PDSCH on the basis of the configuration information, wherein the configuration information can be received from the base station through a specific broadcast channel.

FIG.8

BASED ON THE UE SWITCHING TO NON-CONNECTED MODE, RECEIVING CONFIGURATION INFORMATION RELATED TO A PLURALITY OF UE COMMON PUCCH RESOURCES FOR MULTICAST FROM THE BASE STATION — S810

BASED ON A FIRST GROUP COMMON PDSCH BEING RECEIVED FROM THE BASE STATION, TRANSMITTING A FIRST PUCCH INCLUDING MULTICAST HARQ-ACK INFORMATION FOR THE FIRST GROUP COMMON PDSCH TO THE BASE STATION BASED ON THE CONFIGURATION INFORMATION — S820

BASED ON THE UE SWITCHING FROM NON-CONNECTED MODE TO CONNECTED MODE, TRANSMITTING A SECOND PUCCH INCLUDING MULTICAST HARQ-ACK INFORMATION FOR THE SECOND GROUP COMMON PDSCH TO THE BASE STATION BASED ON THE CONFIGURATION INFORMATION — S830

**Description**

[Technical Field]

The present disclosure relates to wireless communication systems, and more particularly to methods and devices for performing communication in wireless communication systems.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing communication in a wireless communication system.

Additionally, an additional technical problem of the present disclosure is to provide a method and device for configuring PUCCH resources for transmission of NACK-only-based HARQ-ACK in a wireless communication system.

Additionally, an additional technical problem of the present disclosure is to provide a method and device for transmitting and receiving the HARQ-ACK through one or multiple PUCCHs when NACK-only-based HARQ-ACKs are transmitted in the same unit of time in a wireless communication system.

Additionally, an additional technical task of the present disclosure is to provide a method and device for transmitting and receiving HARQ-ACK for multicast PDSCH in an inactive mode or a connected mode.

The technical problems to be achieved by the present disclosure are not limited to the above-described technical objects, and other technical problems which are not described herein will be clearly understood by those skilled in the pertinent art from the following description.

[Technical Solution]

In one embodiment of the present disclosure, a method for a user equipment (UE) to perform communication in a wireless communication system may include: based on the UE switching to a non-connected mode, receiving, from a base station, configuration information related to a plurality of UE-common physical uplink control channel (PUCCH) resources for multicast; based on a first group common physical downlink shared channel (PDSCH) being received from the base station, transmitting, to the base station, a first PUCCH including multicast hybrid automatic repeat request (HARQ)-acknowledge (ACK) information for the first group common PDSCH based on the configuration information; and based on the UE switching from the non-connected mode to a connected mode, transmitting, to the base station, a second PUCCH including multicast HARQ-ACK information for a second group common PDSCH based on the configuration information, and configuration information may be received from the base station through a specific broadcast channel.

In another embodiment of the present disclosure, a method for a base station to perform communication in a wireless communication system may include: based on the UE switching to a non-connected mode, transmitting, to a user equipment (UE), configuration information related to a plurality of UE-common physical uplink control channel (PUCCH) resources for multicast; based on a first group common physical downlink shared channel (PDSCH) being received from the base station, receiving, from the UE, a first PUCCH including multicast hybrid automatic repeat request (HARQ)-acknowledge (ACK) information for the first group common PDSCH based on the configuration information; and based on the UE switching from the non-connected mode to a connected mode, receiving, from the UE, a second PUCCH including multicast HARQ-ACK information for a second group common PDSCH based on the configuration information, and configuration information may be transmitted to the UE through a specific broadcast channel.

[Technical Effects]

According to an embodiment of the present disclosure, a method and device for performing communication in a wireless communication system may be provided.

Additionally, according to an embodiment of the present disclosure, a method and apparatus for configuring PUCCH resources for transmission of NACK-only-based HARQ-ACK in a wireless communication system may be provided.

Additionally, according to an embodiment of the present disclosure, when NACK-only based HARQ-ACKs are transmitted in the same unit of time in a wireless communication system, a method and device for transmitting and receiving the corresponding HARQ-ACK through one or multiple PUCCHs may be provided.

Additionally, according to an embodiment of the present disclosure, a method and apparatus for transmitting and receiving HARQ-ACK for a multicast PDSCH in an inactive mode or a connected mode may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram to describe the process of transmitting NACK-only-based HARQ-ACK for multiple PDSCH/PDCCH.

FIG. 8 is a diagram for describing the uplink transmission operation of a UE in a wireless communication system to which the present disclosure may be applied.

FIG. 9 is a diagram for describing the uplink reception operation of a base station in a wireless communication system to which the present disclosure may be applied.

FIG. 10 is a diagram to describe the configuration of PUCCH spatial relation activation/deactivation MAC CE.

FIG. 11 is a diagram for describing the signaling procedure of the network side and the UE according to an embodiment of the present disclosure.

FIG. 12 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A (Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211 (physical channels and modulation), TS 36.212 (multiplexing and channel coding), TS 36.213 (physical layer procedures), TS 36.300 (overall description), TS 36.331(radio resource control) may be referred to.

For 3GPP NR, TS 38.211(physical channels and modulation), TS 38.212 (multiplexing and channel coding), TS 38.213(physical layer procedures for control), TS 38.214(physical layer procedures for data), TS 38.300(NR and NG-RAN(New Generation-Radio Access Network) overall description), TS 38.331 (radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

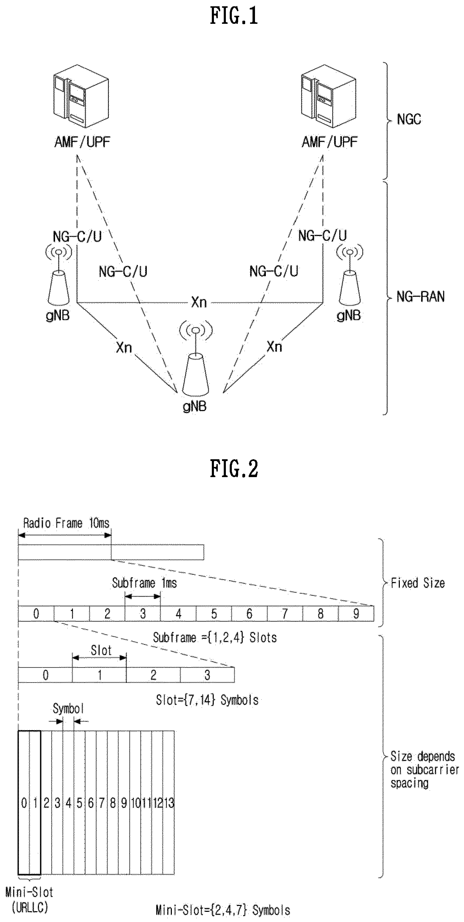

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_\epsilon = 1/(\Delta f_{max} N_f / 100) \cdot T_c = 10$ms. Here, a radio frame is configured with 10 subframes having a duration of $T_{sf} = (\Delta f_{max} N_f / 1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^\mu \in \{0, ..., N_{slot}^{subframe,\mu} - 1\}$ in a subframe and are numbered in an increasing order of $n_{s,f}^\mu \in \{0, ..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |

(continued)

| μ | $N_{symb}^{slot}$ | $N_{slot}^{frame,\mu}$ | $N_{slot}^{subframe,\mu}$ |
|---|---|---|---|
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

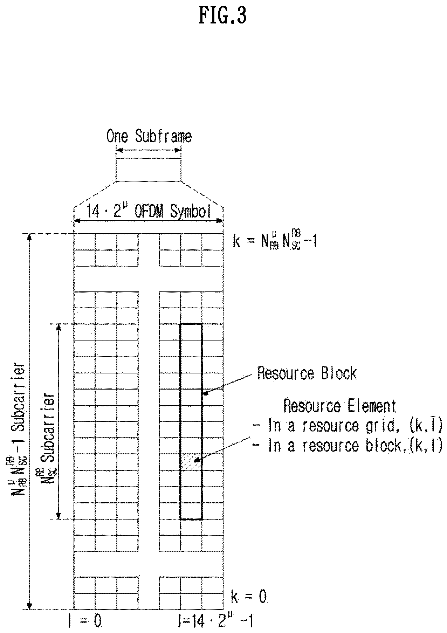

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies.

In this case, one resource grid may be configured per μ and antenna port p. Each element of a resource grid for μ and an antenna port p is referred to as a resource element and is uniquely identified by an index pair (k,l'). Here, k=0, ... , $N_{RB}^{\mu}N_{sc}^{RB}$-1 is an index in a frequency domain and l' =0, ...,$2^{\mu}N_{symb}^{(\mu)}$-1 refers to a position of a symbol in a subframe. When referring to a resource element in a slot, an index pair (k, l) is used. Here, l=0, ..., $N_{symb}^{\mu}$-1. A resource element (k, l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain. Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number). Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k, l) for a subcarrier spacing configuration μ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

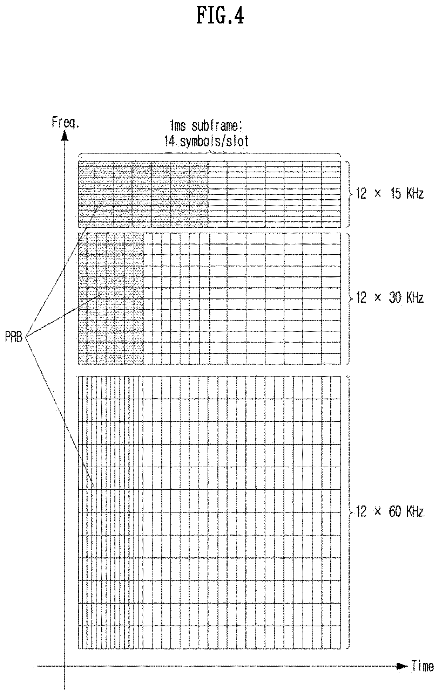

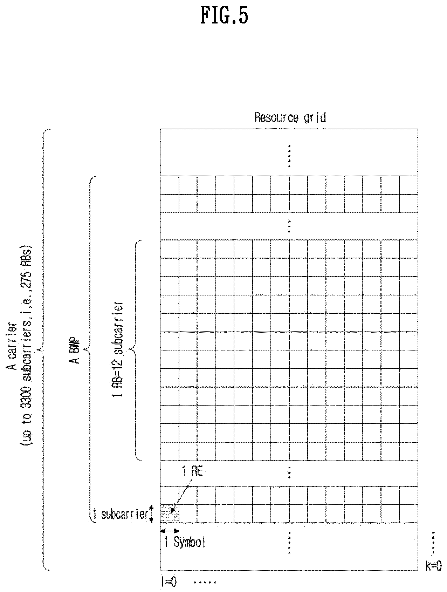

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing.

Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

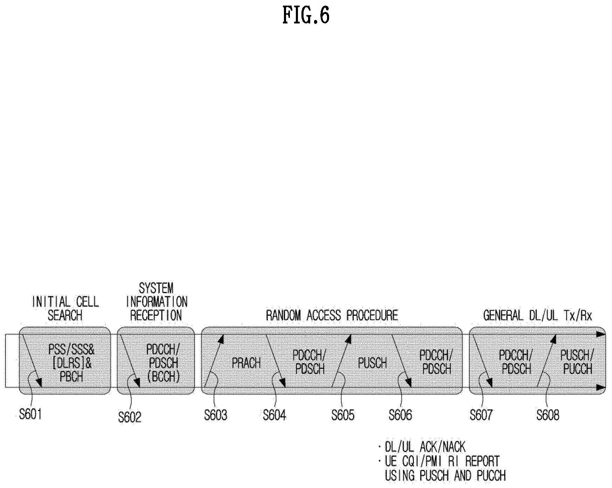

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601) . For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted. Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined. DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

MBMS(multimedia broadcast/multicast service) Scheme

MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

Here, SFN scheme may be used to provide a broadcast service to a wide area (e.g., MBMS area) through resources allocated semi-statically in advance, and SC-PTM scheme may be mainly used to provide a broadcast service only within a cell coverage through dynamic resources.

SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting SC-MCCH or SC-MTCH data may be scheduled through a PDCCH indicated by a Group Radio Network Temporary Identifier (G-RNTI).

In this case, a temporary mobile group identify (TMGI) corresponding to the service ID may be mapped one-to-one with a specific G(group)-RNTI value. Accordingly, when the base station provides a plurality of services, a plurality of G-RNTI values may be allocated for SC-PTM transmission. One or a plurality of terminals may perform PDCCH monitoring by using a specific G-RNTI to receive a specific service.

And, for a specific service/specific G-RNTI, SC-PTM dedicated DRX on-duration period may be configured, and in this case, the UEs may wake up only for a specific on-duration period and perform PDCCH monitoring for the G-RNTI.

MBS (multicast broadcast service) based transmission / reception operation

In a basic wireless communication system, the base station sets UE-specific SPS(semi-persistent scheduling) configuration information to a specific terminal, so that a downlink (DL) SPS transmission resource that is repeated according to a configured period may be allocated to a specific terminal. In this case, the DCI transmitted through the UE-dedicated PDCCH indicates activation of a specific SPS configuration index (SPS activation), thereby indicating the corresponding terminal to repeatedly receive the SPS transmission resource according to a configured period.

This initial SPS transmission resource may be used for initial HARQ transmission, and the base station may allocate a retransmission resource of a specific SPS configuration index through DCI transmitted through a UE-dedicated PDCCH. For example, when the terminal reports a HARQ negative acknowledgment (NACK) for the SPS transmission resource, the base station may allocate the retransmission resource to DCI so that the terminal may receive the DL retransmission.

And, the DCI transmitted through the UE-dedicated PDCCH may indicate deactivation (SPS release or SPS deactivation) of a specific SPS configuration index, and in this case, the corresponding UE may not receive the indicated SPS transmission resource. Here, the CRC of the DCI for the activation/retransmission/deactivation may be scrambled with a CS-RNTI (Configured Scheduling RNTI).

In a wireless communication system (e.g., NR), a DL broadcast or DL multicast transmission scheme for supporting an MBS similar to the above-described MBMS may be applied. The base station may provide a point-to-multipoint (PTM) transmission scheme and a point-to-point (PTP) transmission scheme for DL broadcast or DL multicast transmission.

In the PTM transmission scheme for MBS, the base station may transmit a group common PDCCH and a group common PDSCH to a plurality of terminals, and a plurality of UEs may simultaneously receive the same group common PDCCH and group common PDSCH transmission and decode the same MBS data.

In addition, in the PTP transmission scheme for MBS, the base station may transmit the UE-dedicated PDCCH and the UE-dedicated PDSCH to a specific UE, and only the corresponding UE may receive the UE-dedicated PDCCH and the UE-dedicated PDSCH. Here, when there are a plurality of UEs receiving the same MBS service, the base station may separately transmit the same MBS data to individual UEs through different UE-dedicated PDCCHs and UE-dedicated PDSCHs.

In the PTM transmission scheme, the base station may transmit a plurality of group common PDSCHs to UEs. At this time, the base station may receive the UE's HARQ-ACK for the group common PDSCH through the UE-dedicated PUCCH resource. At this time, if the TB (Transport Block) for the group common PDSCH is successfully decoded, the UE may transmit ACK with HARQ-ACK information.

If the TB for the unicast PDSCH is not successfully decoded, the UE may transmit NACK as HARQ-ACK information. This HARQ-ACK transmission scheme may be referred to as ACK/NACK-based HARQ-ACK. The UE may transmit ACK/NACK-based HARQ-ACK using UE-dedicated PUCCH resources.

Also, assume that a NACK-based (NACK only based) HARQ-ACK scheme is configured for the group common PDSCH. The UE may not perform PUCCH transmission in a situation where ACK must be transmitted. And, the UE may perform PUCCH transmission only in situations where NACK must be transmitted. Here, the UE may transmit HARQ-ACK information including NACK through PUCCH using group common PUCCH resources.

In the case of unicast transmission in the basic wireless communication system, NACK only-based HARQ-ACK transmission was not supported. Accordingly, in the basic wireless communication system, it was not clear how to configure the PUCCH resource for NACK-only based HARQ-ACK for the UE.

Additionally, if the PUCCH transmission of NACK-only-based HARQ-ACK collides with the PUCCH transmission of another NACK-only-based HARQ-ACK or must be transmitted in the same slot, ambiguity may occur related to the NACK-only based HARQ-ACK transmission method.

Hereinafter, the RRC configuration and PUCCH resource determination method for transmitting NACK-only-based HARQ-ACK will be described. In addition, hereinafter, when multiple NACK-only-based HARQ-ACK transmissions overlap (in the time/frequency domain) or should be transmitted in the same slot, a method of transmitting multiple HARQ-ACKs using one PUCCH or multiple PUCCHs will be described.

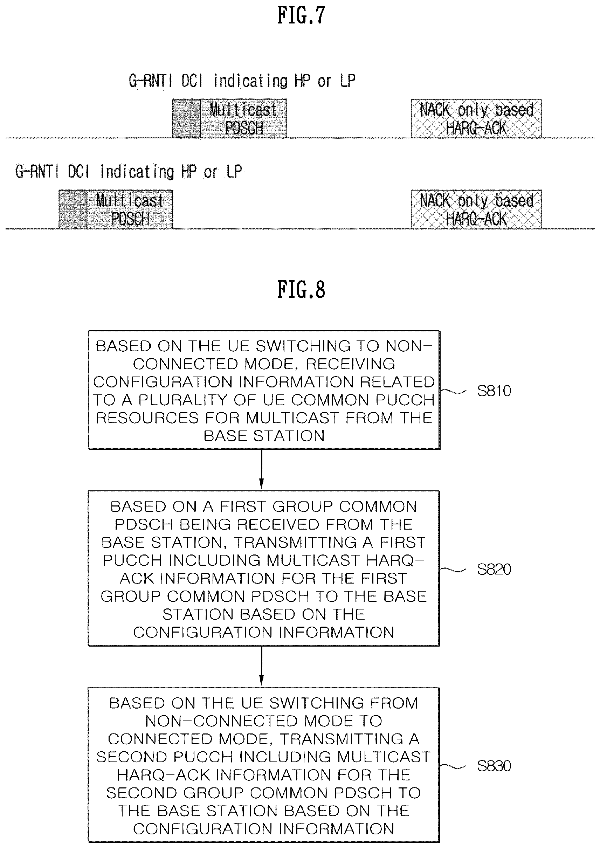

As shown in FIG. 7, the UE may receive a plurality of multicast PDCCH/PDSCH scheduled for different G(group)-RNTIs in FDM or TDM method. At this time, multicast HARQ-ACK transmission for multicast PDCCH/PDSCH may be performed in the same slot, and all multicast HARQ-ACKs may be configured to NACK only-based HARQ-ACK. The UE may transmit multiple NACK-only based HARQ-ACKs through one or multiple PUCCHs.

In the present disclosure, when the NACK-only based HARQ-ACK reported by the UE indicates ACK (i.e., when actual PUCCH transmission is not required), the HARQ-ACK may be judged/regarded as not conflicting with other HARQ-ACKs or SR/CSI reports, etc.

Additionally or alternatively, if NACK-only based HARQ-ACK indicates ACK (i.e., no actual PUCCH transmission is required), it may be determined/regarded that the corresponding HARQ-ACK is transmitted virtually and may conflict with other HARQ-ACKs or SR/CSI reports, etc. The base station may configure whether to determine that the corresponding HARQ-ACK is not actually transmitted or is virtually transmitted.

FIG. 8 is a diagram for describing the communication operation of a UE in a wireless communication system.

Based on the UE switching to non-connected mode, the UE may receive configuration information related to a plurality of UE common physical uplink control channel (PUCCH) resources for multicast from the base station (S810).

As an example, the UE may switch to non-connected mode (from connected mode) by receiving an RRC release message from the base station. At this time, the non-connected mode may include RRC_inactive mode or RRC_idle mode.

Specifically, the UE may receive configuration information related to a plurality of UE common PUCCH resources for ACK/NACK-based HARQ-ACK. Additionally or alternatively, the UE may receive configuration information related to a plurality of (or multicast-related) UE common PUCCH resources for multicast from the base station.

At this time, the plurality of UE-common PUCCH resources for multiple may be a PUCCH resource for NACK-only-based multicast HARQ-ACK. However, this is only one embodiment, and the plurality of UE common PUCCH resources for multicast may be used for ACK/NACK HARQ-ACK.

And, the UE may receive the configuration information from the base station through a specific broadcast channel. For example, a specific broadcast channel may include at least one of a multicast control channel (MCCH) or a broadcast control channel (BCCH). As another example, the UE may receive configuration information from the base station through an RRC release message or system information.

Additionally or alternatively, the UE may receive configuration information related to a plurality of UE PUCCH resources for multicast from the base station before switching to the RRC non-connected mode. That is, the UE may receive the configuration information before or after switching to the non-RRC connected mode. Alternatively, the UE may receive configuration information related to a plurality of UE PUCCH resources for multicast from the base station while switching to the RRC non-connected mode.

Based on a first group common physical downlink shared channel (PDSCH) (or multicast PDSCH) being received from the base station, the UE may transmit a first PUCCH including multicast HARQ (hybrid automatic repeat request)-ACK (acknowledge) information for the first group common PDSCH to the base station based on the configuration information (S820).

As an example, based on the PUCCH resource indicated by downlink control information (or PRI field included in DCI) among the a plurality of UE common PUCCH resources for multicast, the UE may transmit the first PUCCH including multicast HARQ-ACK for the first group common PDSCH.

Based on the UE switching from non-connected mode to connected mode, the UE may transmit a second PUCCH including multicast HARQ-ACK information for the second group common PDSCH to the base station based on the configuration information (S830).

Specifically, the UE may transmit a PUCCH including a multicast HARQ-ACK to the base station during the process of switching to the connected mode (e.g., initial access process) or even after switching to the connected mode based on configuration information related to the UE common PUCCH resource for multicast.

Accordingly, the UE may be able to transmit HARQ-ACK for the multicast PDSCH even in the process of switching to RRC_INACITVE mode or RRC_connected mode.

And, based on the PUCCH resource indicated by DCI among the plurality of UE common PUCCH resources for multicast, the UE may transmit a second PUCCH including a multicast HARQ-ACK for the second group common PDSCH. The DCI corresponding to the HARQ-ACK for the first group common PDSCH may be different from the DCI corresponding to the HARQ-ACK for the second group common PDSCH, but is not limited thereto and may be the same.

In another embodiment, based on the beam failure recovery procedure being performed, the UE may transmit the third PUCCH including the multicast HARQ-ACK for the third group common PDSCH to the base station based on the configuration information.

Specifically, if the uplink synchronization is not correct due to BFR, etc., the UE may not be able to transmit multicast HARQ-ACK according to configuration information for the PUCCH resource dedicated to the UE. Therefore, after transmitting and receiving a message according to the BFR procedure with the base station, the UE may transmit a third PUCCH including multicast HARQ-ACK information for the third group common PDSCH (e.g., PDSCH with Msg. 4 or Msg. B) to the base station based on configuration information related to the UE common PUCCH resource for multicast.

Here, Msg. 4 may include contention resolution MAC CE. And, Msg. B may include a random access response (RAR).

As another example, based on a radio link failure being detected and an RRC reconfiguration procedure being performed, the UE may transmit the fourth PUCCH including multicast HARQ-ACK information for the fourth group common PDSCH to the base station based on the configuration information.

Specifically, after starting the RRC reset process and sending and receiving messages according to the random access procedure (e.g., Msg. 1 to Msg. 4 or Msg. A to Msg. B) in the selected cell, the UE may transmit the fourth PUCCH including multicast HARQ-ACK information for the fourth group common PDSCH (e.g., PDSCH with Msg. 4 or Msg. B) to the base station based on configuration information related to the UE common PUCCH resource for multicast.

As another example, based on a handover command being received from the base station, the UE may transmit the fifth PUCCH including multicast HARQ-ACK information for the fifth group common PDSCH to the base station based on the configuration information in the target cell.

Specifically, when moving to the target cell as a handover procedure is performed, the UE may not be able to transmit multicast HARQ-ACK using UE-specific PUCCH resource configuration information. Therefore, after receiving the handover command, the UE may transmit the fourth PUCCH including multicast HARQ-ACK information for the fourth group common PDSCH to the base station based on configuration information related to the UE common PUCCH resource for multicast in the source cell or target cell.

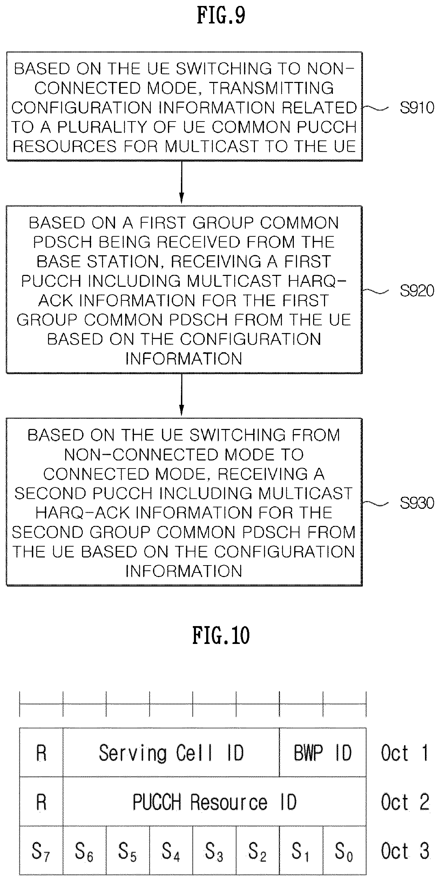

FIG. 9 is a diagram for describing the communication operation of a base station in a wireless communication system to which the present disclosure may be applied.

Based on the UE switching to non-connected mode, the base station may transmit configuration information related to a plurality of UE common physical uplink control channel (PUCCH) resource for multicast to the UE (S910).

At this time, the base station may transmit an RRC release message to the UE so that the UE can switch to the non-connected mode.

The base station may receive a first PUCCH including multicast HARQ-ACK information for the first group common PDSCH based on configuration information from the UE (S920).

Based on the UE switching from non-connected mode to connected mode, the base station may receive a second PUCCH including multicast HARQ-ACK information for the second group common PDSCH based on configuration information from the UE (S930).

Since the operations and related information in steps S910, S920, and S930 may correspond to the operations and related information in steps S810, S820, and S830, content that overlaps with the content described with reference to FIG. 8 will be omitted.

Hereinafter, a method of configuring PUCCH resources for NACK-only based HARQ-ACK for the UE is described in detail.

Embodiment 1

Embodiment 1 relates to a method for determining/configuring PUCCH resources for NACK-only based HARQ-ACK through DCI for the UE. When a PUCCH resource for NACK-only based HARQ-ACK is configured for the UE, the base station may configure an RRC IE for a specific PUCCH resource and transmit it to the UE in a manner described later.

Embodiment 1-1

The UE may distinguish between NACK-only-based HARQ-ACK and ACK/NACK-based HARQ-ACK using different PRI (PUCCH resource indicator) and PUCCH resource ID.

For example, for each PUCCH resource, indication information (or indicator) indicating whether NACK-only-based HARQ-ACK or ACK/NACK-based HARQ-ACK is configured may be included/set (Embodiment 1-1-1). For example, the RRC IE (e.g., RRC IE PUCCH resource) for a specific PUCCH resource may include at least one of an IE PUCCH resource ID or an indication to NACK only based on IE NACK only.

As an another example, RRC IE including a specific PUCCH resource (e.g., RRC IE PUCCH resource set) may include a PUCCH resource for IE NACK only-based HARQ-ACK (IE PUCCH resource for NACK only) and a PUCCH resource for IE ACK/NACK-based HARQ-ACK (IE PUCCH resource for ACK/NACK) (Embodiment 1-1-2). Here, all IEs included in the RRC IE including a specific PUCCH resource may be mapped to the same PUCCH resource set ID.

At this time, ACK/NACK-based HARQ-ACK may be configured for PUCCH resources between 0 and 3 indicated through PRI, and NACK-only-based HARQ-ACK may be configured for PUCCH resources between 4 and 7 indicated through PRI.

In the case of Embodiment 1-1-2, the same PUCCH resource set may include separate PUCCH resources in which ACK/NACK-based HARQ-ACK and NACK-only-based HARQ-ACK are each configured. At this time, different PUCCH resource IDs may be mapped to separate PUCCH resources included in the same PUCCH resource set.

Embodiment 1-2

As another example, NACK-only-based HARQ-ACK and ACK/NACK-based HARQ-ACK may be distinguished through a separate indicator in DCI.

According to Embodiment 1-2-1, for example, both ACK/NACK-based HARQ-ACK and NACK-only-based HARQ-ACK may be configured to be possible for the same PUCCH resource ID through an RRC message. Additionally, a separate indicator included in the DCI may indicate whether to apply the ACK/NACK HARQ-ACK setting or the NACK only-based HARQ-ACK setting to the terminal. Therefore, there may be no need to configure whether NACK-only HARQ-ACK is supported for each PUCCH resource through the RRC message.

As an example, the base station may configure whether to support NACK-only-based HARQ-ACK in units of PUCCH configuration information (e.g., 'PUCCH-config') or in units of PUCCH resource sets. At this time, the UE may assume that all PUCCH resources included in the PUCCH resource set by 'PUCCH-config' or the PUCCH resource set support NACK-only based HARQ-ACK.

According to Embodiment 1-2-2, it may be configured to ACK/NACK-based HARQ-ACK or NACK-only-based HARQ-ACK for different PUCCH resource sets in PUCCH configuration information (e.g., 'PUCCH-config').

For example, the RRC IE PUCCH configuration (e.g., 'PUCCH-config') may include at least one of a PUCCH resource set for IE NACK only-based HARQ-ACK or a PUCCH resource set for IE ACK/NACK-based HARQ-ACK.

If the RRC IE PUCCH configuration (e.g., 'PUCCH-config') includes a PUCCH resource set for IE NACK only-based HARQ-ACK, NACK-only based HARQ-ACK may be configured for all PUCCH resources between 0 and 7 indicated through PRI.

And, if the RRC IE PUCCH configuration (e.g., 'PUCCH-config') includes a PUCCH resource set for IE ACK/NACK-based HARQ-ACK, ACK/NACK-based HARQ-ACK may be configured for PUCCH resources between 0 and 7 indicated through PRI.

According to Embodiment 1-2-3, Different PUCCH configuration information (e.g., 'PUCCH-config') in the PUCCH configuration list information (e.g. 'PUCCH-configurationList') may be configured to ACK/NACK-based HARQ-ACK or NACK-only-based HARQ-ACK.

For example, the RRC IE PUCCH configuration information list (e.g., 'PUCCH-configurationList') may include at least one of the PUCCH configuration information for IE NACK only-based HARQ-ACK.

If the RRC IE PUCCH configuration information list includes PUCCH configuration information for IE NACK only-based HARQ-ACK, NACK-only based HARQ-ACK may be configured for all PUCCH resources between 0 and 7 indicated through PRI.

And, if the RRC IE PUCCH configuration information list includes PUCCH configuration information for IE ACK/NACK-based HARQ-ACK, ACK/NACK-based HARQ-ACK may be configured for PUCCH resources between 0 and 7 indicated through PRI.

Embodiment 1-3

In a basic wireless system, up to four PUCCH resource sets for ACK/NACK-based HARQ-ACK may be configured considering the payload size. However, one PUCCH resource set for NACK-only-based HARQ-ACK may be sufficient. For example, it may be sufficient to configure only PUCCH resource set 0 for PUCCH format (PF) 0 and PF 1. Therefore, in the above-described embodiment, the UE may determine the PUCCH resource set for NACK-only based HARQ-ACK in the same manner as the embodiment described later.

Hereinafter, a method of determining a PUCCH resource set for NACK-only based HARQ-ACK from a plurality of PUCCH resource sets configured by the base station will be described.

When NACK-only-based HARQ-ACK and ACK/NACK-based HARQ-ACK share the same PUCCH resource set, in the list of up to four PUCCH resource sets set by PUCCH configuration information (e.g., 'PUCCH-config'), only the first PUCCH resource set (i.e., a PUCCH resource set with a PUCCH resource set ID of 0) may be configured as NACK-only based HARQ-ACK (Embodiment 1-3-1).

As an another example, even if there is no separate NACK-only-based HARQ-ACK related instruction for the first PUCCH resource set, for 'PUCCH-config' for multicast, only NACK-only-based HARQ-ACK may be configured (enabled), or both NACK-only-based HARQ-ACK and ACK/NACK-based HARQ-ACK may be configured (enabled).

As an another example, the base station may configure whether the first or specific PUCCH resource from a list of up to four PUCCH resource sets in the PUCCH configuration information (e.g., 'PUCCH-config') is used for NACK-only based HARQ-ACK (Embodiment 1-3-2).

As an example, the base station may indicate/configure to the UE whether to use NACK-only based HARQ-ACK through PUCCH configuration information (e.g., 'PUCCH-config') or the first or specific PUCCH resource set within the PUCCH resource set of PUCCH configuration information (e.g., 'PUCCH-config') (Embodiment 1-3-2-1).

As another example, whether the first PUCCH resource set is used for transmission of NACK-only based HARQ-ACK may be indicated through DCI (Embodiment 1-3-2-2).

For example, assume that NACK-only based HARQ-ACK is indicated through a specific DCI. At this time, the UE may use the first or specific PUCCH resource set of PUCCH configuration information (e.g., 'PUCCH-config') for NACK only-based HARQ-ACK transmission, and may determine/deem that the PUCCH resource indicated by the PRI of the corresponding DCI is the PUCCH resource within the first or specific PUCCH resource set.

As an example, when NACK-only based HARQ-ACK is indicated through DCI, the UE may (always) select the PUCCH resource indicated by the PRI of the DCI from the first PUCCH resource set and transmit NACK-only based HARQ-ACK (Embodiment 1-3-3).

Additionally or alternatively, assume that a specific PUCCH resource set is configured for transmission of NACK-only based HARQ-ACK through PUCCH configuration information (e.g., 'PUCCH-config'). When NACK-only-based HARQ-ACK is indicated through the DCI, the UE may (always) transmit NACK-only-based HARQ-ACK by selecting the PUCCH resource indicated by the PRI of the DCI from a specific PUCCH resource set.

Embodiment 2

Embodiment 2 relates to a PUCCH resource determination method for multiple NACK-only based HARQ-ACK.

Assume that a PUCCH transmission including NACK-only-based HARQ-ACK collides with another PUCCH transmission containing NACK-only-based HARQ-ACK or must be transmitted in the same slot. At this time, a UE capable of transmitting two PUCCHs simultaneously may transmit at least two NACK-only-based HARQ-ACKs simultaneously on different PUCCHs. However, if it is not capable of transmitting two PUCCHs simultaneously or if a larger number of NACK-only-based HARQ-ACKs collide, the UE may transmit NACK-only-based HARQ-ACK in a manner described later.

Embodiment 2-1

Among a plurality of PUCCH resources for a plurality of NACK-only-based HARQ-ACK transmissions that overlap (in the time/frequency domain) or are transmitted in the same slot, the UE may select and transmit one PUCCH resource for one HARQ-ACK, and drop the remaining HARQ-ACKs that are not selected. The UE may determine one PUCCH resource according to the settings of the base station in an embodiment to be described later.

As an example, the UE may select and transmit the PUCCH resource corresponding to the lowest PUCCH resource ID among the PUCCH resources for the collided NACK-only-based HARQ-ACKs (Embodiment 2-1-1). If the DCI includes a PRI, the UE may select the PUCCH resource indicated by the lowest PRI and transmit HARQ-ACK using the selected PUCCH resource.

As another example, the UE may select the PUCCH resource indicated by the PRI of the last received DCI among the DCIs corresponding to the collided NACK-only-based HARQ-ACKs, and transmit HARQ-ACK using the selected PUCCH resource (Embodiment 2-1-2).

As another example, the UE may select a PUCCH resource using PUCCH configuration information for unicast among PUCCH resources for collided NACK-only-based HARQ-ACKs, and may transmit HARQ-ACK using the selected PUCCH resource (Embodiment 2-1-3).

For example, assume a case where PUCCH resources for NACK-only based HARQ-ACK may be configured by PUCCH configuration information for unicast. At this time, the UE may determine/deem that the corresponding PUCCH resource has priority over the PUCCH resource for NACK-only-based HARQ-ACK determined/configured by multicast PUCCH configuration information.

As another example, the UE may select a high-priority PUCCH resource among PUCCH resources for collided NACK-only-based HARQ-ACKs and transmit HARQ-ACK using the selected PUCCH resource (Embodiment 2-1-4).

For example, if the DCI corresponding to the conflicting NACK-only-based HARQ-ACKs indicates priority, the UE may select a PUCCH resource for NACK-only based HARQ-ACK indicated by HP and transmit HARQ-ACK using the selected PUCCH resource. Additionally or alternatively, the UE may select the PUCCH resource of the PUCCH configuration information for HP with priority over the PUCCH resource of the PUCCH configuration information for LP, and transmit HARQ-ACK using the selected PUCCH resource.

As another example, the UE may select the PUCCH resource indicated by the PRI of the DCI that is CRC scrambled by the C-RNTI among the DCIs corresponding to the collided NACK-only-based HARQ-ACKs, and may transmit HARQ-ACK using the selected PUCCH resource (Embodiment 2-1-5).

For example, when there are CRC scrambled DCIs with multiple C-RNTIs indicating conflicting NACK-only based HARQ-ACKs, the UE may select the PUCCH resource indicated by the CRC scrambled DCI with the last received C-RNTI and transmit HARQ-ACK using the selected PUCCH resource.

Additionally or alternatively, if a DCI for PTP retransmission is included (or exists) among the CRC scrambled DCIs with C-RNTI, the UE may select the PUCCH resource indicated by the CRC scrambled DCIs using the remaining C-RNTI excluding the DCI, and transmit HARQ-ACK using the selected PUCCH resource.

As another example, the UE may select the HARQ-ACK of the PUCCH resource indicated by the PRI in priority over the HARQ-ACK of the PUCCH resource not indicated by the PRI, and transmit the HARQ-ACK using the selected PUCCH resource (Embodiment 2-1-6).

As another example, the UE may select and transmit a PUCCH resource on which to transmit NACK among the collided NACK-only-based HARQ-ACKs (Embodiment 2-1-7).

For example, when one NACK and one ACK are indicated for two collided NACK-only-based HARQ-ACKs, the UE may select and transmit the PUCCH resource corresponding to the NACK. That is, in the NACK-only-based transmission method, ACK is not transmitted, so the UE may select and transmit only the PUCCH resource corresponding to NACK.

As another example, the UE may select a PUCCH resource according to the fastest or slowest starting symbol order or the fastest or slowest ending symbol order among the PUCCH resources for the collided NACK-only-based HARQ-ACK, and may transmit HARQ-ACK using the selected PUCCH resource (Embodiment 2-1-8).

As another example, the UE may select a PUCCH resource in order of the lowest or highest starting PRB among the PUCCH resources for the collided NACK-only-based HARQ-ACK and transmit HARQ-ACK using the selected PUCCH resource (Embodiment 2-1-9).

Embodiment 2-2

When there are M NACK-only-based HARQ-ACKs that overlap (in the time/frequency domain) or are transmitted in the same slot, and the UE may transmit up to N PUCCHs, the UE may transmit NACK-only based HARQ-ACKs using N PUCCHs. At this time, the UE may drop the (M-N) PUCCHs that cannot be transmitted, or may transmit them by including them in another HARQ-ACK on the N transmitted PUCCH resources. To this end, the UE may determine N PUCCHs according to the configurations of the base station in a manner described later.

If the UE has the ability to simultaneously transmit up to N (N < M) PUCCH/NACK only-based HARQ-ACKs among M PUCCH/NACK-only-based HARQ-ACKs, the UE may select the PUCCH resource corresponding to the lowest (or highest) N PUCCH resource ID values among the M PUCCH resource ID values (Example 2-2-1). Additionally, the UE may transmit NACK-only based HARQ-ACKs using the selected PUCCH resource. Here, when the DCI includes PRI, the value indicated by PRI may correspond to the PUCCH resource ID.

As another example, assume that the UE is capable of simultaneously transmitting up to N (N < M) PUCCH/NACK only-based HARQ-ACKs among M PUCCH/NACK-only-based HARQ-ACKs. Here, the UE may select N HARQ-ACKs with the lowest (or highest) G-RNTI value corresponding to the PDCCH/PDSCH for the M collided NACK-only-based HARQ-ACKs (Embodiment 2-2-2). And, the UE may transmit HARQ-ACK to the selected N PUCCHs.

As another example, assume that the UE is capable of simultaneously transmitting up to N (N < M) PUCCH/NACK only-based HARQ-ACKs among M PUCCH/NACK-only-based HARQ-ACKs. At this time, the UE may select N PUCCH resources according to the order of the start symbol or ending symbol among the PUCCH resources for the M collided NACK-only-based HARQ-ACK (Example 2-2-3). And, the UE may transmit HARQ-ACK to the selected N PUCCHs.

As another example, assume that the UE is capable of simultaneously transmitting up to N (N < M) PUCCH/NACK only-based HARQ-ACKs among M PUCCH/NACK-only-based HARQ-ACKs. At this time, the UE may select N PUCCH resources among the PUCCH resources for the M collided NACK-only-based HARQ-ACK in the order of the lowest or highest starting PRB (Embodiment 2-2-4) . And, the UE may transmit HARQ-ACK to the selected N PUCCHs.

As another example, assume that the UE is capable of simultaneously transmitting up to N (N < M) PUCCH/NACK only-based HARQ-ACKs among M PUCCH/NACK-only-based HARQ-ACKs. At this time, the UE may select a PUCCH resource according to the priority for the M collided NACK-only-based HARQ-ACK (Embodiment 2-2-5). And, the UE may transmit HARQ-ACK to the selected N PUCCHs. That is, the UE may select and transmit N or fewer PUCCH resources with high priority (or HP) among M PUCCH resources.

At this time, the priority is determined by the priority index indicated by DCI or the priority specified by the base station in an RRC message.

Even if the UE may transmit three PUCCH resources simultaneously, if there are two HP PUCCH resources, the UE may select and transmit two PUCCHs. Additionally or alternatively, the UE may select all of the HP PUCCHs and then select the remaining one PUCCH in a manner according to another embodiment.

As another example, assume that the UE is capable of simultaneously transmitting up to N (N < M) PUCCH/NACK only-based HARQ-ACKs among M PUCCH/NACK-only-based HARQ-ACKs. At this time, the UE may bundle (or group) M NACK-only-based HARQ-ACKs for each N PUCCH transmission (Example 2-2-6). And, the UE may transmit HARQ-ACK using the selected N PUCCH resources.

As an example, assume that a UE capable of transmitting 3 PUCCHs must transmit 5 NACK-only based HARQ-ACKs. The UE may select three PUCCHs using at least one of the methods according to the above-described embodiments. Additionally, the UE may arrange 5 HARQ-ACKs in response to 3 PUCCHs in a specific order. For example, the UE may deploy HARQ-ACK 1 and HARQ-ACK 4 for PUCCH 1, HARQ-ACK 2 and HARQ-ACK 5 for PUCCH 2, and HARQ-ACK 3 for PUCCH 3.

At this time, the order of the three PUCCHs may be determined according to the method according to the above-described embodiment (i.e., N PUCCH selection method). Additionally, the order of the five HARQ-ACKs can also be determined according to the method according to the above-described embodiment (i.e., the N PUCCH selection method described above).

And, if only one (or at least one) of one or more HARQ-ACKs mapped to one PUCCH indicates NACK, the UE may transmit NACK for the corresponding PUCCH. Additionally, the UE may not transmit the PUCCH only if all HARQ-ACKs mapped to one PUCCH are ACKs.

As another example, the UE may select and transmit the PUCCH resource indicated by the PRI of the last N DCIs received among DCIs for collided NACK-only-based HARQ-ACKs (Embodiment 2-2-7).

As another example, the UE may select and transmit up to N PUCCH resources using unicast PUCCH configuration information among PUCCH resources for collided NACK-only-based HARQ-ACKs (Embodiment 2-2-8).

As another example, the UE may select and transmit up to N PUCCH resources indicated by the PRI of the DCI that is CRC scrambled by the C-RNTI among the DCIs corresponding to the collided NACK-only-based HARQ-ACKs (Embodiment 2-2-9).

As an example, if a DCI for PTP retransmission is included among the DCIs CRC scrambled with C-RNTI, the UE may select and transmit N PUCCH resources indicated by the DCIs CRC scrambled with C-RNTI other than the corresponding DCI. As another example, the UE may select and transmit N PUCCH resources indicated by N DCIs including the corresponding DCI.

As another example, the UE may select the HARQ-ACK of the PUCCH resource indicated by the PRI in priority over the HARQ-ACK of the PUCCH resource not indicated by the PRI (Example 2-2-10). Therefore, the UE may select N PUCCH resources indicated by PRI and transmit HARQ-ACK.

Embodiment 2-3

Among multiple PUCCH resources for multiple NACK-only-based HARQ-ACK transmissions that overlap (in the time/frequency domain) or are transmitted in the same slot, the UE may select one PUCCH resource (by a method according to various embodiments of the present disclosure). Additionally, the UE may rotate constellation points on the constellation in the selected PUCCH resource to indicate multiple statuses for multiple NACK-only based HARQ-ACKs.

As Embodiment 2-3-1, the UE may transmit PUCCH with CS (cyclic shift) index 0 for NACK for one NACK-only based HARQ-ACK. The UE may transmit PUCCH with CS index 3 for NACKs for two NACK only-based HARQ-ACKs. The UE may transmit PUCCH with CS index 6 for NACKs for three NACK-only-based HARQ-ACKs. The UE may transmit PUCCH with CS index 9 for NACKs for four or more NACK-only-based HARQ-ACKs. At this time, if there is more than one ACK for multiple NACK-only based HARQ-ACKs, the terminal may not transmit PUCCH.

As Embodiment 2-3-2, the UE may transmit PUCCH with CS index 0 for NACK for one NACK only-based HARQ-ACK. The UE may transmit PUCCH with CS index 3 for NACK for two NACK only-based HARQ-ACKs. The UE may transmit PUCCH with CS index 6 for NACKs for three or more NACK only-based HARQ-ACKs. At this time, if there is more than one ACK for a plurality of NACK only-based HARQ-ACKs, the UE may transmit PUCCH with CS index 9 for the corresponding HARQ-ACK.

As Embodiment 2-3-3, the UE may transmit PUCCH with CS index 0 for NACK for one NACK only-based HARQ-ACK. The UE may transmit PUCCH with CS index 3 for NACKs for two or more NACK-only-based HARQ-ACKs.

At this time, the UE may transmit PUCCH with CS index 6 for ACK for NACK-only-based HARQ-ACK with the earliest (oldest) timing. And, the UE may transmit PUCCH with CS index 9 for ACK for the NACK-only-based HARQ-ACK with the latest timing (most recent) or the second earliest timing. If there are more than a certain number of ACKs (regardless of whether the timing is ACK for the NACK-only-based HARQ-ACK with the earliest or latest timing), the UE may not transmit PUCCH. Here, a specific number may be configured by the base station.

Embodiment 2-4

Among multiple PUCCH resources for multiple NACK-only-based HARQ-ACK transmissions that overlap (in the time/frequency domain) or are transmitted in the same slot, assume that at least one or more NACK-only based HARQ-ACKs indicate NACK. At this time, the UE may select one PUCCH resource and transmit one NACK for multiple NACK-only based HARQ-ACK transmissions according to Embodiment 2-1.

At this time, the base station may configure N to a specific value. And, the N value may be configured to be adjusted according to the RSRP measurement value of the serving cell measured by the UE.

Embodiment 3

Embodiment 3 relates to a method of configuring multicast HARQ-ACK through SIB1.

The UE may receive PUCCH configuration information through a UE-dedicated RRC message in RRC_CONNECTED mode. Accordingly, the base station may provide UE-specific PUCCH configuration information to the UE that receives the multicast PDSCH through a terminal-specific RRC message. However, in certain situations, the UE may not be able to transmit multicast HARQ-ACK according to the UE-specific PUCCH configuration information.

Therefore, in the above specific situation, the UE may receive UE common PUCCH configuration information and transmit multicast HARQ-ACK. To this end, in addition to the UE common PUCCH configuration information (e.g., 'PUCCH-ConfigCommon'), the base station may configure separate multicast UE common PUCCH configuration information (e.g., 'PUCCH-ConfigCommon') for the terminal as shown in Table 6.

[Table 6]

```
PUCCH-ConfigCommon-MBS ::= SEQUENCE {
pucch-ResourceCommon INTEGER (0..15) OPTIONAL, -- Cond
InitialBWP-Only
pucch-GroupHopping ENUMERATED { neither, enable,
disable },
hoppingId INTEGER (0..1023) OPTIONAL, -- Need R
p0-nominal INTEGER (-202..24) OPTIONAL, -- Need R
... }
```

The UE may receive separate multicast UE common PUCCH configuration information (e.g., 'PUCCH-ConfigCommon') through a UE-specific RRC message, SIB1, other SI, SIB for MBS, or MCCH message. Assume that the UE receives the separate multicast terminal common PUCCH configuration information (e.g., 'PUCCH-ConfigCommon') and confirms a specific case, which will be described later. At this time, the UE receiving the multicast PDSCH or/and PTP retransmission may transmit a multicast HARQ-ACK to the PUCCH resource indicated by the DCI among a plurality of PUCCH resources according to the UE common PUCCH configuration information for multicast(e.g., 'PUCCH-ConfigCommon') .

In order to reduce PUCCH-related overhead, the base station may configure only NACK-only-based HARQ-ACK through multicast terminal common PUCCH configuration information (e.g., 'PUCCH-ConfigCommon'). At this time, even without separate settings, the UE may only transmit NACK-only-based HARQ-ACK through the PUCCH resource of the UE common PUCCH configuration information (e.g., 'PUCCH-ConfigCommon').

Cases in which the UE transmits a multicast PDSCH or multicast HARQ-ACK for PTP retransmission using the UE common PUCCH configuration information for multicast (e.g., 'PUCCH-ConfigCommon') are as follows.

As case 1, when the UE receives a multicast PDSCH in the process of entering RRC_CONNECTED mode (i.e., initial access process) or transmits a HARQ-ACK for a broadcast PDSCH, the UE cannot transmit multicast HARQ-ACK according to the UE-specific PUCCH configuration information.

For case 1, after sending RACH Msg (message) 3 or RACH Msg. A or receiving RACH Msg. 2 or RACH Msg. B for the initial connection process, the UE may transmit a PUCCH for multicast HARQ-ACK according to the UE common PUCCH configuration information for multicast.

For case 2, when a UE in RRC_CONNECTED mode performs RRC re-establishment due to RLF (Radio Link Failure) or UL synchronization is not correct due to BFR (Beam Failure Recovery), etc. the UE cannot transmit multicast HARQ-ACK according to the UE-specific PUCCH configuration information.

As an example, after detecting the RLF, the UE may transmit a PUCCH for multicast HARQ-ACK according to the UE common PUCCH configuration information for multicast.

Additionally or alternatively, after sending RACH Msg. 3 or RACH Msg. A from the selected cell, or after receiving RACH Msg. 2 or RACH Msg. B, the RRC reset process begins, the UE may transmit a PUCCH for multicast HARQ-ACK according to the UE common PUCCH configuration information for multicast.

Additionally or alternatively, after sending RACH Msg. 1, RACH Msg. 3, or RACH Msg. A for BFR, or after receiving RACH Msg. 2 or RACH Msg. B, the UE may transmit a PUCCH for multicast HARQ-ACK according to the UE common PUCCH configuration information for multicast.

As case 3, when moving to the target cell according to a handover procedure, the UE cannot transmit multicast HARQ-ACK according to the UE-specific PUCCH configuration information.

After receiving the handover command, the UE may transmit a PUCCH for multicast HARQ-ACK according to the UE common PUCCH configuration information for multicast in the source cell or target cell.

Additionally or alternatively, even after receiving the handover command, the UE may transmit a PUCCH for NACK-only-based or ACK/NACK-based multicast HARQ-ACK according to UE-specific PUCCH configuration information (e.g., 'PUCCH-Config') for unicast or multicast in the source cell.

In particular, after transmitting RACH Msg. 1, RACH Msg. 3, or RACH Msg. A for handover in the target cell, or receiving RACH Msg. 2 or RACH Msg. B, the UE may transmit a PUCCH for multicast HARQ-ACK according to the UE common PUCCH configuration information for multicast.

As an example, assume that UE-specific PUCCH configuration information (e.g., 'PUCCH-Config') for unicast or multicast to be used in the target cell is received through a handover command. After the target cell transmits RACH Msg. 1, RACH Msg. 3, or RACH Msg. A, or after receiving RACH Msg. 2 or RACH Msg. B, the UE may transmit a PUCCH for NACK-only-based or ACK/NACK-based multicast HARQ-ACK according to UE-specific PUCCH configuration information (e.g., 'PUCCH-Config') for unicast or multicast.

As case 4, when receiving an RRC Release message, the terminal moves/operates to RRC_IDLE or RRC_INACTIVE, so multicast HARQ-ACK cannot be transmitted according to the UE-specific PUCCH configuration information.

At this time, the UE may transmit the PUCCH for multicast HARQ-ACK according to the UE common PUCCH configuration information for multicast (e.g., 'PUCCH-ConfigCommon') in the selected cell immediately after receiving the RRC release message.

As an example, assume that UE-specific PUCCH configuration information (e.g., 'PUCCH-Config') for unicast or multicast to be used in the selected cell is received through an RRC release message. At this time, the UE may transmit a PUCCH for NACK-only-based or ACK/NACK-based multicast HARQ-ACK according to unicast or multicast UE-specific PUCCH configuration information (e.g., 'PUCCH-Config').

Additionally or alternatively, immediately after the RRC release message, the UE may continue to use the previously used UE-specific PUCCH configuration information (e.g., 'PUCCH-Config') without canceling it. Accordingly, in the cell selected immediately after the RRC release message, the UE may transmit a PUCCH for NACK-only or ACK/NACK-based multicast HARQ-ACK according to the UE-specific PUCCH configuration information (e.g., 'PUCCH-Config') for unicast or multicast.

In the case described above, if the UE does not receive the UE common PUCCH configuration information for multicast(e.g., 'PUCCH-ConfigCommon'), the UE cannot transmit the PUCCH for multicast HARQ-ACK according to the UE common PUCCH configuration information for multicast (e.g., 'PUCCH-ConfigCommon'). Additionally or alternatively, in the case described above, if the UE common PUCCH setting information for multicast (e.g., 'PUCCH-ConfigCommon') is not received, but the UE common PUCCH setting information of SIB1 (e.g., 'PUCCH-ConfigCommon') is configured to be used, the UE may transmit PUCCH for multicast HARQ-ACK according to UE common PUCCH configuration information (e.g., 'PUCCH-ConfigCommon').

Embodiment 4

Embodiment 4 relates to the transmission and reception operation of PUCCH spatial relation Activation/Deactivation MAC CE.

In the PUCCH spatial relationship active/inactive MAC CE shown in FIG. 10, the S field may be mapped to one specific PUCCH spatial relation ID information (e.g., 'PUCCH-SpatialRelationInfoId') within the PUCCH configuration information for unicast (e.g., 'PUCCH-Config').

As an example, when the S field is configured/set to 1, activation of PUCCH spatial relation information for 'PUCCH-SpatialRelationInfoId' mapped thereto may be indicated. At this time, the UE may determine that the PUCCH resource in the PUCCH resource ID field of the MAC CE is mapped to a reference signal included in the PUCCH spatial relation information.

When the MAC CE shown in FIG. 10 that activates or deactivates the PUCCH spatial relation is received, the UE may activate or deactivate the PUCCH spatial relation of the PUCCH resource for multicast HARQ-ACK according to a method to be described later.

Embodiment 4-1

If the PUCCH resource for transmitting multicast HARQ-ACK is determined according to PUCCH configuration information for unicast (e.g., 'PUCCH-config'), the UE may activate or deactivate the PUCCH spatial relation of the PUCCH resource transmitting multicast HARQ-ACK according to the MAC CE shown in FIG. 10.

Here, if the PUCCH resource ID indicated by the PUCCH resource ID field is configured for both unicast HARQ-ACK and multicast HARQ-ACK, the UE may apply the same PUCCH spatial relation information indicated by the MAC CE to both unicast HARQ-ACK transmission and multicast HARQ-ACK transmission.

Additionally, the base station may configure the PUCCH resource ID for multicast HARQ-ACK and the PUCCH resource ID for unicast HARQ-ACK to not be shared. In this case, the UE may determine whether the PUCCH spatial relation indicated by the MAC CE applies only to unicast HARQ-ACK transmission or only to multicast HARQ-ACK transmission, depending on the PUCCH resource ID indicated by the PUCCH resource ID field.

Embodiment 4-2

When the PUCCH resource for transmitting multicast HARQ-ACK is determined according to PUCCH configuration information for multicast (e.g., 'PUCCH-config'), the UE may activate or deactivate the PUCCH spatial relation of the PUCCH resource transmitting multicast HARQ-ACK according to the MAC CE shown in FIG. 10.

Here, if the PUCCH resource indicated by the PUCCH resource ID field is used for both unicast HARQ-ACK and multicast HARQ-ACK transmission, the UE may apply the same PUCCH spatial relation indicated by the MAC CE only to unicast HARQ-ACK transmission.

Additionally or alternatively, if the PUCCH resource for transmitting multicast HARQ-ACK according to the configurations of the base station is determined according to the PUCCH configuration information for multicast (e.g., 'PUCCH-config'), the UE may also activate or deactivate the PUCCH spatial relation of PUCCH resources transmitting multicast HARQ-ACK according to the MAC CE shown in FIG. 10.

The base station may provide a separate MAC CE to the UE to activate or deactivate the PUCCH spatial relation. At this time, a separate PUCCH spatial relation activation/deactivation MAC CE for multicast may be configured in the same or similar manner as in FIG. 10. However, the MAC PDU may be divided into MAC CE for multicast (activation/deactivation of spatial relation) and MAC CE for unicast (activation/deactivation of spatial relationship) with different LCID (logical channel ID) values.

Additionally or alternatively, the PUCCH spatial relation for unicast PUCCH and multicast PUCCH may be separately established for the same PUCCH resource ID with one MAC CE. For example, in the MAC CE structure shown in FIG. 10, a separate PUCCH resource ID field for multicast and a new 2-octet field for S fields may be added under (Oct 3).

Embodiment 4-3

Assume that the PUCCH resource for transmitting multicast HARQ-ACK is determined according to PUCCH configuration information (e.g., 'PUCCH-config') for unicast or multicast. At this time, the PUCCH spatial relation of PUCCH resources for transmitting multicast HARQ-ACK may be activated or deactivated according to the MAC CE shown in FIG. 10. In addition, the PUCCH spatial relation of PUCCH resources for transmitting multicast HARQ-ACK may be activated or deactivated according to the above-described MAC CE for multicast or MAC CE of a new structure.

Here, the base station may configure the PUCCH resource ID for multicast HARQ-ACK and the PUCCH resource ID for unicast HARQ-ACK to be shared.

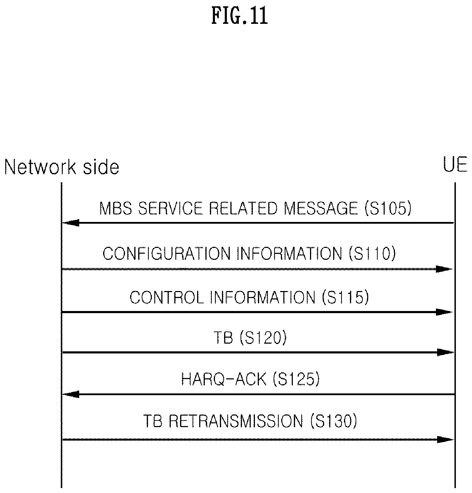

FIG. 11 is a diagram for describing the signaling procedure of the network side and the UE according to an embodiment of the present disclosure.

FIG. 11 shows an example of signaling between a network side and a terminal (UE) in a situation where the embodiments (e.g., Embodiment 1, Embodiment 2, Embodiment 3, Embodiment 4 or a combination of one or more of the detailed Embodiments thereof) of the present disclosure described above may be applied.

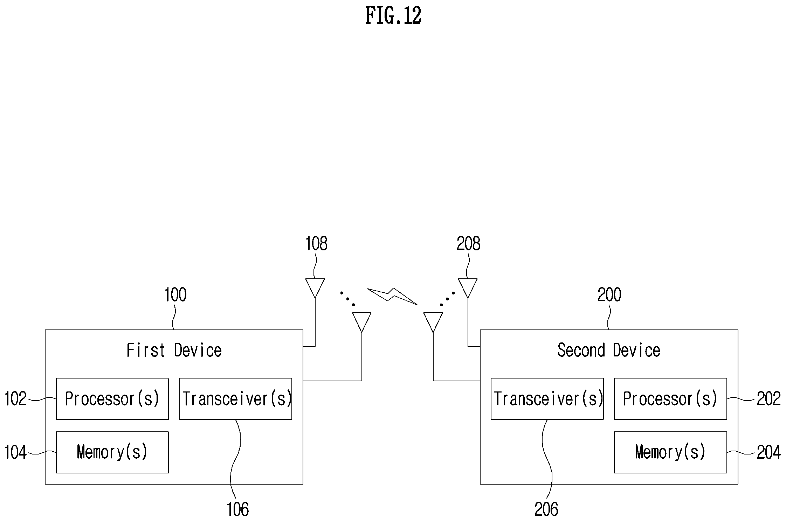

Here, the UE/network side is exemplary and may be applied to various devices as described with reference to FIG. 12. FIG. 11 is for convenience of description, and does not limit the scope of the present disclosure. In addition, some step(s) shown in FIG. 11 may be omitted depending on circumstances and/or settings. In addition, in the operation of the network side / UE of FIG. 11, the above-described uplink transmission/reception operation etc. may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID) .

In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP (Transmission Point), at least one TRP (Transmission and Reception Point), etc. In addition, a TP and/or a TRP may include a panel, a transmission and reception unit, etc. of a base station.

The UE may enter RRC_CONNECTED mode and report a message indicating one or more interested MBS services to the network (S105).

Here, the UE may transmit the message to the network through at least one of a UCI, MAC CE (Control Element), and RRC message. And, the MBS service of interest in the message may mean one of TMGI or G-RNTI listed in the DL message received from the network side.

For example, the DL message may be a service availability message listing TMGI #1, TMGI #3, TMGI #5, and TMGI #10. If the UE is interested in TMGI #5, the UE may indicate the order of TMGI #5 in the message. That is, the UE may report '3' to the network.

As another example, the DL message may be a service availability message listing G-RNTI #1, G-RNTI #3, G-RNTI #5, and G-RNTI #10. If the UE is interested in G-RNTI #10, the UE may indicate the order of G-RNTI #10 in the message. That is, the UE may report '4' to the network.

For example, the operation of the UE (100 or 200 in FIG. 12) in step S105 described above to transmit the message to the network side (200 or 100 in FIG. 12) may be implemented by the device in FIG. 12, which will be described below. For example, referring to FIG. 12, one or more processors 102 may control one or more transceivers 106 and/or one or more memories 104 to transmit the message, and one or more transceivers 106 may transmit the message to the network.

Upon receiving the message, the network side may transmit configuration information to the UE via an RRC message (S110).

For example, the configuration information may include search space configuration information including CFR (common frequency resource) configuration information, one or more group common PDSCH configurations information including TCI state for one or more G-RNTI values, and TCI status for one or more G-RNTI values.

Here, the RRC message may be a group common message transmitted through a PTM Multicast Control Channel (MCCH) or a UE-specific message transmitted through a UE-specific Dedicated Control Channel (DCCH).

And, CFR may include DL CFR and UL CFR. For example, one DL CFR may provide group common PDCCH and group common PDSCH transmission resources for MBS transmission and reception. One UL CFR may provide HARQ-ACK PUCCH resources for group common PDSCH reception. One CFR may be one MBS-specific BWP or one UE-specific BWP. Additionally or alternatively, one or multiple CFRs may be set within one UE-specific BWP. One CFR may have a connection relationship with one UE-specific BWP.

The UE may be configured with at least a G-RNTI value for each MBS CFR or each serving cell. GC-CS-RNTI may be configured/used to activate(or enable), retransmit or release one or more group common SPS configurations.

If it is not configured with CFR for the UE or GC-CS-RNTI for the serving cell, and CS-RNTI is configured for the CFR or serving cell, the UE may use the CS-RNTI to activate, retransmit, or release one or more group common SPS configurations.

The network side may associate a TMGI list or a G-RNTI list with one GC-CS-RNTI value. At this time, the network side may provide a TMGI list or a G-RNTI list associated with the GC-CS-RNTI value.

Additionally, the configuration information (e.g., 'PDSCH-config') of each PDSCH may be configured as shown in Table 8 with the minimum information elements for multicast and/or broadcast.

[Table 7]

```
PDSCH-Config ::= SEQUENCE {
dataScramblingIdentityPDSCH INTEGER (0..1023) OPTIONAL, -- Need S
dmrs-DownlinkForPDSCH-MappingTypeA SetupRelease { DMRS-
DownlinkConfig } OPTIONAL, -- Need M
dmrs-DownlinkForPDSCH-MappingTypeB SetupRelease { DMRS-
DownlinkConfig } OPTIONAL, -- Need M
tci-StatesToAddModList SEQUENCE (SIZE(1..maxNrofTCI-States)) OF TCI-
State OPTIONAL, -- Need N
tci-StatesToReleaseList SEQUENCE (SIZE(1..maxNrofTCI-States)) OF TCI-
StateId OPTIONAL, -- Need N
vrb-ToPRB-Interleaver ENUMERATED {n2, n4} OPTIONAL, -- Need S
resourceAllocation ENUMERATED { resourceAllocationType0,
resourceAllocationType1, dynamicSwitch},
pdsch-TimeDomainAllocationList SetupRelease { PDSCH-
TimeDomainResourceAllocationList } OPTIONAL, -- Need M
pdsch-AggregationFactor ENUMERATED { n2, n4, n8 } OPTIONAL, -- Need S
rateMatchPatternToAddModList SEQUENCE (SIZE
(1..maxNrofRateMatchPatterns)) OF RateMatchPattern OPTIONAL, -- Need
N
rateMatchPatternToReleaseList SEQUENCE (SIZE
(1..maxNrofRateMatchPatterns)) OF RateMatchPatternId OPTIONAL, --
Need N
rateMatchPatternGroup1 RateMatchPatternGroup OPTIONAL, -- Need R
rateMatchPatternGroup2 RateMatchPatternGroup OPTIONAL, -- Need R
rbg-Size ENUMERATED {config1, config2},
mcs-Table ENUMERATED {qam256, qam64LowSE} OPTIONAL, -- Need S
maxNrofCodeWordsScheduledByDCI ENUMERATED {n1, n2}
... }
```

For example, the operation of the UE (100 or 200 in FIG. 12) in step S110 described above receiving the configuration information from the network side (200 or 100 in FIG. 12) may be implemented by the device in FIG. 11, which will be described below. For example, referring to FIG. 11, one or more processors 102 may control one or more transceivers 106 and/or one or more memories 104 to receive the configuration information, and one or more transceivers 106 may receive the configuration information from a network side. The UE may receive control information from the network (S115) . For example, the UE may receive downlink control information (DCI) for scheduling/activating/deactivating uplink/downlink from the network side.

Specifically, if a search space is configured for the configured CFR, the UE may receive CRC scrambled DCI with G-RNTI or G(group)-CS (configured scheduling)-RNTI by monitoring the PDCCH in the SS (search space) set in the configured CFR.

For example, the operation of the UE (100 or 200 in FIG. 12) in step S115 described above receiving the control information from the network side (200 or 100 in FIG. 12) may be implemented by the device in FIG. 12, which will be described below. For example, referring to FIG. 12, one or more processors 102 may control one or more transceivers 106 and/or one or more memories 104 to receive the control information, and one or more transceivers 106 may receive the control information from a network side.

The UE may receive TB from the network side (S120).

Specifically, if a data unit is available on the MTCH of the MBS radio bearer (MRB) for the MBS service, the network side may include a data unit for the SPS PDSCH occasion associated with the MTCH of the MRB for the MBS service, or associated with the TMGI of the MBS service, or associated with the short ID of the MBS service, or may construct the TB associated with the G-RNTI mapped to the MBS service according to the service-to-resource mapping and transmit it to the UE.

For group common dynamic scheduling of TB, the network side may transmit DCI to the UE through PDCCH. The DCI may be CRC scrambled by G-RNTI, G-CS-RNTI, or CS-RNTI. PDCCH may be implemented as a group common PDCCH or a UE-specific PDCCH.

For example, the DCI may include at least one of identifier for DCI format, carrier indicator, bandwidth part indicator, Frequency domain resource assignment, time domain resource allocation, VRB-to-PRB mapping, PRB bundling size indicator, rate matching indicator, ZP CSI-RS trigger, MCS, NDI, RV, HARQ process number, downlink allocation index, TPC command for scheduled PUCCH, PUCCH resource indicator, PDSCH-to-HARQ_feedback timing indicator, antenna port, transmission setup indication, SRS request, DMRS sequence initialization, priority indicator.

For group common dynamic scheduling, by group common or UE specific RRC message or by group common or UE specific MAC CE, the network side may provide the UE with one or more service-resource mappings for MBS services identified by TMGI or G-RNTI or GC-CS-RNTI. Data of the MBS service may be carried through the MBS radio bearer (MRB) of the multicast traffic logical channel, that is, the MTCH associated with the MBS service. The RRC message may be a group common message transmitted through a PTM Multicast Control Channel (MCCH) or a UE-specific message transmitted through a UE-specific Dedicated Control Channel (DCCH). The DCI scheduling PDSCH carrying MBS service data may also indicate one or more of a short ID, MTCH ID, MRB ID, G-RNTI value, and TMGI value for the MBS service.

When the UE receives the CRC scrambled DCI by the G-RNTI it wants to receive, the UE may determine the MBS service(s) associated with one or more of the short ID, MTCH ID, MRB ID, G-RNTI value, and TMGI value for each PDSCH occasion, based on the mapping between the MBS service indicated in the DCI and the HPN and/or the mapping between the MBS service indicated in the DCI and the short ID(s).

Then, if the UE is interested in the determined MBS service(s), the UE may receive the PDSCH transmission scheduled by the DCI. If the UE is not interested in the determined MBS service(s), the UE may not receive the PDSCH transmission scheduled by DCI.

For example, the operation of the UE (100 or 200 in FIG. 12) in step S120 described above to receive the TB from the network side (200 or 100 in FIG. 12) can be implemented by the device in FIG. 12, which will be described below. For example, referring to FIG. 12, one or more processors 102 may control one or more transceivers 106 and/or one or more memories 104 to receive the TB, and one or more transceivers 106 may receive the TB from a network side.

Upon receiving the group common DCI indicating the PUCCH resource for MBS HARQ-ACK, the UE may transmit HARQ-ACK through the PUCCH after receiving the PDSCH scheduled by the DCI (S125). That is, depending on the decoding state of PDSCH transmission, the UE may transmit HARQ feedback to the network.

For PTM scheme 1, the group common DCI may indicate a single PUCCH resource indicator and a single PDSCH-to-HARQ_feedback timing indicator at least for ACK/NACK-based HARQ-ACK.

Specifically, in the case of UE-specific PUCCH resource allocation for ACK/NACK-based HARQ-ACK for group common DCI, Other UEs in the group may be configured to a different value of at least 'PUCCH-Resource' and 'dl-DataToUL-ACK' in the UE-specific 'PUCCH-config' for multicast or unicast (unless 'PUCCH-config' for multicast is configured). Different PUCCH resources may be allocated to different UEs by the same PUCCH resource indicator and the same PDSCH-to-HARQ_feedback timing indicator of the group common DCI.

For PTP retransmission, in a UE-specific DCI, the PUCCH resource indicator and PDSCH-to-HARQ_feedback timing indicator may be interpreted based on 'PUCCH-config' for unicast regardless of whether 'PUCCH-config' for multicast is configured.

Here, PRI (PUCCH Resource Indicator) may be indicated by the group common DCI, as will be described later.

As an example, a UE-specific PRI list may be included in the DCI (Option 1A-1). Each PRI in that list may indicate an entry corresponding to the candidate 'pucch-ResourceId' value of 'PUCCH-config' for allocation of the same PUCCH resource or different PUCCH resources for different UEs in the group that received the same DCI. Different PRIs in the DCI can point to different entries in 'PUCCH-config'.

Here, the candidate 'pucch-ResourceId' value may be configured by RRC, and a different 'pucch-ResourceId' value may be configured for other UEs of the same group at least in multicast 'PUCCH-config'.

As another example, a group common PRI may be included in the DCI (Option 1A-2) . A single group common PRI may indicate a specific entry for a candidate 'pucch-ResourceId' value in the UE-specific 'PUCCH-config' for allocation of the same or different PUCCH resources for all UEs in the group.

And, the candidate 'pucch-ResourceId' value may be configured by RRC. At least in 'PUCCH-config' for multicast, different 'pucch-ResourceId' values may be configured for different UEs in the same group.

If 'PUCCH-config' for multicast is configured with HARQ-ACK to group common PDSCHs scheduled by group common DCI, the UE may assume that the PRI of the group common DCI indicates an entry corresponding to the candidate 'pucch-ResourceId' value of 'PUCCH-config' for multicast.

If 'PUCCH-config' for multicast is configured with HARQ-ACK to group common PDSCHs scheduled by group common DCI, the UE may assume that the PRI of the group common DCI indicates an entry corresponding to the candidate 'pucch-ResourceId' value of 'PUCCH-config' for multicast.

K1 (PDSCH-to-HARQ_feedback timing indicator) may be indicated by the group common DCI, as will be described later.

As an example, a list of UE-specific K1 values may be included in the DCI (Option 1B-1). Each K1 in the list may indicate the same UL slot or a different UL (sub)slot for other terminals in the group.

For example, different K1 values are assigned to different UEs. That is, a K1 value may be assigned to UE 1, a K2 value may be assigned to UE 2, and a K3 value may be assigned to UE 3.

As another example, the K1 value may be shared by multiple UEs. For example, UE 1 and UE 2 may share the K1 value, and UE 3 and UE 4 may share the K2 value.

As another example, one K1 value may be a reference, and another K1 value may be assigned based on that reference. {List of K1_ref, K1_offset} may be indicated in DCI.

For example, UE 1 may use K1_ref, UE 2 may use K1_ref + K1_offest1, and UE 3 may use K1_ref + K1_offest2.

As another example, a group common K1 value may be included in the DCI (Option 1B-2). For example, a single K1 value may be the same for all UEs in a group receiving DCI, or may indicate a corresponding entry for the candidate 'dl-DataToUL-ACK' value in the UE-specific 'PUCCH-config' for different PUCCH resource allocation. This can be applied when the DCI format is configured in the UE-specific 'PUCCH-config' for the K1 value.

As another example, the candidate 'dl-DataToUL-ACK' value is configured by RRC and may be configured differently for other UEs of the same group at least in 'PUCCH-config' for multicast.

As another example, if 'PUCCH-config' for multicast is configured for HARQ-ACK for grouping common PDSCH scheduled by group common DCI, the UE may assume that the K1 value of the group common DCI indicates the corresponding entry for the candidate 'dl-DataToUL-ACK' value in 'PUCCH-config' for multicast.

As another example, if 'PUCCH-config' for multicast is not configured for HARQ-ACK to group common PDSCH scheduled by group common DCI, the UE may assume that the K1 value of the group common DCI indicates an entry corresponding to the candidate 'dl-DataToUL-ACK' value in 'PUCCH-config' for unicast.

In addition, upon receiving the group common DCI CRC scrambled by the G-RNTI and/or the terminal-specific DCI CRC scrambled by the C-RNTI, if Type-1 HARQ-ACK codebook is configured for 'PUCCH-config' for multicast and/or 'PUCCH-config' for unicast, the UE may configure TDRA (Time Domain Resource Allocation) to generate a type-1 HARQ-ACK codebook for HARQ-ACK(s) to group common PDSCH scheduled by group common DCI and/or UE-specific PDSCH scheduled by UE-specific DCI.

If TB decoding is not successful in the PDSCH transmission occasion, the UE may transmit HARQ NACK to the base station through PUCCH resources in the configured UL CFR.

By using PUCCH resources, the UE may transmit HARQ-ACK to other PDSCH transmissions, such as unicast SPS PDSCH, dynamic unicast PDSCH, PTP retransmission, and/or dynamic group common PDSCH.

Here, to multiplex HARQ-ACK on PUCCH in (sub)slots for SPS PDSCH for multicast, SPS PDSCH for unicast, dynamically scheduled multicast PDSCH and/or dynamically scheduled unicast PDSCH, the UE may construct a codebook based on one or more of the above-described options.

If the RSRP threshold is configured, the UE may use NACK-only based HARQ-ACK based NACK based on the RSRP of the measured serving cell. If the measured RSRP is higher than the threshold, NACK-only-based HARQ-ACK may be transmitted through the group common PUCCH resource indicated by the DCI's PRI. If the measured RSRP is lower than the threshold, NACK-only-based HARQ-ACK can be changed to ACK/NACK-based HARQ-ACK on the UE-specific PUCCH resource indicated by the PRI of the DCI.

Meanwhile, when 'pdsch-AggregationFactor' is configured for G-RNTI or 'repeat_number' is indicated by DCI from the network side, TB scheduled by group common DCI, if configured, may be repeated for the Nth HARQ transmission of the TB within each symbol allocation between each 'pdsch-AggregationFactor' consecutive slot or between each 'repeat_number' consecutive slot.

For example, the operation of the UE (100 or 200 in FIG. 12) in step S125 described above to transmit the HARQ-ACK from the network side (200 or 100 in FIG. 12) may be implemented by the device in FIG. 12, which will be described below. For example, referring to FIG. 12, one or more processors 102 may control one or more transceivers 106 and/or one or more memories 104 to transmit the HARQ-ACK, and one or more transceivers 106 may transmit the HARQ-ACK from a network side.

The network side that has received the HARQ NACK in the TCI state may retransmit the PDCCH and PDSCH using the TCI state in the DL CFR configured for retransmission of the TB (S130).

The UE may monitor the group common and/or UE-specific PDCCH using the TCI state for the search space configured in the DL CFR to receive retransmission of the TB. The network side may retransmit the TB to one of the UEs in the group by UE-specific PDCCH. However, since the other UE successfully received the TB, it may not receive the TB retransmission.

When the UE receives the PDCCH for retransmission of the TB, the UE may receive the PDSCH scheduled by the DCI of the PDCCH. If the UE successfully decodes TB from PDSCH, the UE may consider the decoded TB to be associated with short ID for MTCH, MRB, TMGI, G-RNTI and/or MBS services based on the mapping between the MBS service indicated by the DCI and the HPN (HARQ process number), and/or the mapping between the MBS service indicated by the DCI and the short ID(s).

If TB decoding is successful at the PDSCH transmission occasion, the UE may transmit HARQ ACK to the network through PUCCH resources in the UL CFR configured according to the above-described procedure. Using the PUCCH resource, the UE may transmit HARQ-ACK to other PDSCH transmissions, such as unicast SPS PDSCH, dynamic unicast PDSCH, PTP retransmission, and/or dynamic group common PDSCH.

In this case, to multiplex HARQ-ACK on PUCCH in (sub)slots for SPS PDSCH for multicast, SPS PDSCH for unicast, dynamically scheduled multicast PDSCH and/or dynamically scheduled unicast PDSCH, the UE may construct a codebook based on one or more of the options/embodiments described above.

For example, the operation of the UE (100 or 200 in FIG. 12) in step S130 described above receiving a TB retransmission from the network side (200 or 100 in FIG. 12) may be implemented by the device in FIG. 12, which will be described below. For example, referring to FIG. 12, one or more processors 102 may control one or more transceivers 106 and/or one or more memories 104, etc. to receive the TB retransmission, and one or more transceivers 106 may receive the TB retransmission from a network side.

General Device to which the Present Disclosure may be applied

FIG. 12 illustrates a block diagram of a wireless communication device according to an embodiment of the present disclosure.

In reference to FIG. 12, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure.

For example, the processor 102 may process the information in the memory 104 to generate first information/signal and then transmit a wireless signal including the first information/signal through the transceiver 106. Additionally, the processor 102 may receive a wireless signal including the second information/signal through the transceiver 106 and then store information obtained from signal processing of the second information/signal in the memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for a user equipment (UE) to perform communication in a wireless communication system, the method comprising:

   based on the UE switching to a non-connected mode, receiving, from a base station, configuration information related to a plurality of UE-common physical uplink control channel (PUCCH) resources for multicast;
   based on a first group common physical downlink shared channel (PDSCH) being received from the base station, transmitting, to the base station, a first PUCCH including multicast hybrid automatic repeat request (HARQ)-acknowledge (ACK) information for the first group common PDSCH based on the configuration information; and
   based on the UE switching from the non-connected mode to a connected mode, transmitting, to the base station, a second PUCCH including multicast HARQ-ACK information for a second group common PDSCH based on the configuration information,

wherein configuration information is received from the base station through a specific broadcast channel.

2. The method of claim 1, wherein:
based on a PUCCH resource indicated by downlink control information among the plurality of UE-common PUCCH resources for multicast, at least one of the first PUCCH or the second PUCCH is transmitted to the base station.

3. The method of claim 1, wherein:
the multicast HARQ-ACK information includes NACK only-based HARQ-ACK information.

4. The method of claim 1, wherein:
the specific broadcast channel includes at least one of a multicast control channel (MCCH) or a broadcast control channel (BCCH).

5. The method of claim 1, wherein:
based on a beam failure recovery procedure being performed, a third PUCCH including multicast HARQ-ACK information for the third group common PDSCH is transmitted to the base station based on the configuration information.

6. The method of claim 1, wherein:
based on a radio link failure being detected and an RRC reconfiguration procedure being performed, a fourth PUCCH including multicast HARQ-ACK information for a fourth group common PDSCH is transmitted to the base station based on the configuration information.

7. The method of claim 1, wherein:
based on a handover command being received from the base station, a fifth PUCCH including multicast HARQ-ACK information for a fifth group common PDSCH is transmitted to the base station based on the configuration information in a target cell.

8. The method of claim 1, wherein:
based on an RRC release message being received from the base station, the UE switches to the non-connected mode.

9. The method of claim 1, wherein:
the non-connected mode includes RRC_inactive mode or RRC_idle mode.

10. A user equipment (UE) performing communication in a wireless communication system, the UE comprising:

at least one transceiver; and
at least one processor coupled to the at least one transceiver;
wherein the at least one processor is configured to:

based on the UE switching to a non-connected mode, receive, from a base station through the at least one transceiver, configuration information related to a plurality of UE-common physical uplink control channel (PUCCH) resources for multicast;
based on a first group common physical downlink shared channel (PDSCH) being received from the base station, transmit, to the base station through the at least one transceiver, a first PUCCH including multicast hybrid automatic repeat request (HARQ)-acknowledge (ACK) information for the first group common PDSCH based on the configuration information; and
based on the UE switching from the non-connected mode to a connected mode, transmit, to the base station through the at least one transceiver, a second PUCCH including multicast HARQ-ACK information for a second group common PDSCH based on the configuration information,
wherein configuration information is received from the base station through a specific broadcast channel.

11. A method for a base station to perform communication in a wireless communication system, the method comprising:

based on a user equipment (UE) switching to a non-connected mode, transmitting, to the UE, configuration information related to a plurality of UE-common physical uplink control channel (PUCCH) resources for multicast;
based on a first group common physical downlink shared channel (PDSCH) being received from the base station, receiving, from the UE, a first PUCCH including multicast hybrid automatic repeat request (HARQ)-acknowledge (ACK) information for the first group common PDSCH based on the configuration information; and based on the UE switching from the non-connected mode to a connected mode, receiving, from the UE, a second PUCCH including multicast HARQ-ACK information for a second group common PDSCH based on the configuration information,
wherein configuration information is transmitted to the UE through a specific broadcast channel.

12. A base station performing communication in a wireless communication system, the method comprising:

at least one transceiver; and
at least one processor coupled to the at least one transceiver;
wherein the at least one processor is configured to:

based on a user equipment (UE) switching to a non-connected mode, transmit, to the UE, through the at least one transceiver, configuration information related to a plurality of UE-common physical uplink control channel (PUCCH) resources for multicast;
based on a first group common physical downlink shared channel (PDSCH) being received from the base station, receive, from the UE through the at least one transceiver, a first PUCCH including multicast hybrid automatic repeat request (HARQ)-acknowledge (ACK) information for the first group common PDSCH based on the configuration information; and
based on the UE switching from the non-connected mode to a connected mode, receive, from the UE through the at least one transceiver, a second PUCCH including multicast HARQ-ACK information for a second group common PDSCH based on the configuration information,
wherein configuration information is transmitted to the UE through a specific broadcast channel.

13. A processing device configured to control a user equipment (UE) to perform communication in a wireless communication system, the processing device comprising:

at least one processor; and
at least one computer memory operatively coupled to the at least one processor and storing instructions for performing operations upon being executed by the at least one processor,
wherein the operations comprise:

based on the UE switching to a non-connected mode, receiving, from a base station, configuration information related to a plurality of UE-common physical uplink control channel (PUCCH) resources for multicast;
based on a first group common physical downlink shared channel (PDSCH) being received from the base station, transmitting, to the base station, a first PUCCH including multicast hybrid automatic repeat request (HARQ)-acknowledge (ACK) information for the first group common PDSCH based on the configuration information; and
based on the UE switching from the non-connected mode to a connected mode, transmitting, to the base station, a second PUCCH including multicast HARQ-ACK information for a second group common PDSCH based on the configuration information,
wherein configuration information is received from the base station through a specific broadcast channel.

14. At least one non-transitory computer readable medium storing at least one instruction, wherein:
the at least one instruction executed by at least one processor controls a device which performs communication in a wireless communication system to perform:

based on a user equipment (UE) switching to a non-connected mode, receiving, from a base station, configuration information related to a plurality of UE-common physical uplink control channel (PUCCH) resources for multicast;
based on a first group common physical downlink shared channel (PDSCH) being received from the base station, transmitting, to the base station, a first PUCCH including multicast hybrid automatic repeat request (HARQ)-acknowledge (ACK) information for the first group common PDSCH based on the configuration information; and
based on the UE switching from the non-connected mode to a connected mode, transmitting, to the base station, a second PUCCH including multicast HARQ-ACK information for a second group common PDSCH based on the configuration information,
wherein configuration information is received from the base station through a specific broadcast channel.

# FIG.1

# FIG.2

## FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

# FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601    S602    S603    S604    S605    S606    S607    S608

· DL/UL ACK/NACK
· UE CQI/PMI RI REPORT
  USING PUSCH AND PUCCH

## FIG.7

G-RNTI DCI indicating HP or LP

| Multicast PDSCH |    | NACK only based HARQ-ACK |

G-RNTI DCI indicating HP or LP

| Multicast PDSCH |    | NACK only based HARQ-ACK |

## FIG.8

BASED ON THE UE SWITCHING TO NON-CONNECTED MODE, RECEIVING CONFIGURATION INFORMATION RELATED TO A PLURALITY OF UE COMMON PUCCH RESOURCES FOR MULTICAST FROM THE BASE STATION ~ S810

BASED ON A FIRST GROUP COMMON PDSCH BEING RECEIVED FROM THE BASE STATION, TRANSMITTING A FIRST PUCCH INCLUDING MULTICAST HARQ-ACK INFORMATION FOR THE FIRST GROUP COMMON PDSCH TO THE BASE STATION BASED ON THE CONFIGURATION INFORMATION ~ S820

BASED ON THE UE SWITCHING FROM NON-CONNECTED MODE TO CONNECTED MODE, TRANSMITTING A SECOND PUCCH INCLUDING MULTICAST HARQ-ACK INFORMATION FOR THE SECOND GROUP COMMON PDSCH TO THE BASE STATION BASED ON THE CONFIGURATION INFORMATION ~ S830

# FIG.9

BASED ON THE UE SWITCHING TO NON-CONNECTED MODE, TRANSMITTING CONFIGURATION INFORMATION RELATED TO A PLURALITY OF UE COMMON PUCCH RESOURCES FOR MULTICAST TO THE UE ~ S910

BASED ON A FIRST GROUP COMMON PDSCH BEING RECEIVED FROM THE BASE STATION, RECEIVING A FIRST PUCCH INCLUDING MULTICAST HARQ-ACK INFORMATION FOR THE FIRST GROUP COMMON PDSCH FROM THE UE BASED ON THE CONFIGURATION INFORMATION ~ S920

BASED ON THE UE SWITCHING FROM NON-CONNECTED MODE TO CONNECTED MODE, RECEIVING A SECOND PUCCH INCLUDING MULTICAST HARQ-ACK INFORMATION FOR THE SECOND GROUP COMMON PDSCH FROM THE UE BASED ON THE CONFIGURATION INFORMATION ~ S930

# FIG.10

| | | | | | | | | | |
|---|---|---|---|---|---|---|---|---|---|

| R | Serving Cell ID | | BWP ID | | Oct 1 |
|---|---|---|---|---|---|
| R | PUCCH Resource ID | | | | Oct 2 |
| $S_7$ | $S_6$ | $S_5$ | $S_4$ | $S_3$ | $S_2$ | $S_1$ | $S_0$ | Oct 3 |

# FIG.11

Network side                                                              UE

MBS SERVICE RELATED MESSAGE (S105)

CONFIGURATION INFORMATION (S110)

CONTROL INFORMATION (S115)

TB (S120)

HARQ-ACK (S125)

TB RETRANSMISSION (S130)

# FIG.12

# EP 4 383 611 A1

## INTERNATIONAL SEARCH REPORT

International application No.

**PCT/KR2022/011619**

### A. CLASSIFICATION OF SUBJECT MATTER

**H04L 1/18**(2006.01)i; **H04L 5/00**(2006.01)i; **H04W 72/04**(2009.01)i; **H04W 72/12**(2009.01)i

According to International Patent Classification (IPC) or to both national classification and IPC

### B. FIELDS SEARCHED

Minimum documentation searched (classification system followed by classification symbols)

H04L 1/18(2006.01); H04W 72/00(2009.01); H04W 72/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비-커넥티드 모드(non-connected mode), 멀티캐스트(multicast), HARQ(hybrid automatic repeat request)-ACK(acknowledge), 물리 상향링크 제어 채널 정보(physical uplink control channel, PUCCH)

### C. DOCUMENTS CONSIDERED TO BE RELEVANT

| Category* | Citation of document, with indication, where appropriate, of the relevant passages | Relevant to claim No. |
|---|---|---|
| Y | OPPO. Discussion on support for IDLE and INACTIVE state UEs. R1-2104761, 3GPP TSG-RAN WG1 Meeting #105-e, e-Meeting. 12 May 2021.<br>See section 2.3. | 1-14 |
| Y | WO 2021-139747 A1 (FG INNOVATION COMPANY LIMITED) 15 July 2021 (2021-07-15)<br>See paragraph [0112]. | 1-14 |
| A | INTEL CORPORATION. NR MBS for RRC_IDLE and INACTIVE UEs. R1-2104930, 3GPP TSG-RAN WG1 Meeting #105-e, e-Meeting. 12 May 2021.<br>See section 2.2. | 1-14 |
| A | INTEL CORPORATION. Mechanisms to Improve Reliability of NR MBS for RRC_CONNECTED UEs. R1-2104929, 3GPP TSG-RAN WG1 Meeting #105-e, e-Meeting. 12 May 2021.<br>See sections 2.1.1-2.1.2. | 1-14 |
| A | WO 2021-031841 A1 (QUALCOMM INCORPORATED) 25 February 2021 (2021-02-25)<br>See claims 1-26. | 1-14 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 November 2022** | **18 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/011619**

| Patent document cited in search report | | | Publication date (day/month/year) | Patent family member(s) | | | Publication date (day/month/year) |
|---|---|---|---|---|---|---|---|
| WO | 2021-139747 | A1 | 15 July 2021 | EP | 4055927 | A1 | 14 September 2022 |
| | | | | KR | 10-2022-0123088 | A | 05 September 2022 |
| WO | 2021-031841 | A1 | 25 February 2021 | CN | 114208340 | A | 18 March 2022 |
| | | | | EP | 4014632 | A1 | 22 June 2022 |
| | | | | WO | 2021-030982 | A1 | 25 February 2021 |

Form PCT/ISA/210 (patent family annex) (July 2022)